# EUROPEAN PATENT APPLICATION

(11) **EP 4 432 244 A1**
(43) Date of publication of application: **18.09.2024**
(21) Application number: 24155337.9
(22) Date of filing: 01.02.2024
(51) Int. Cl.: G06T 19/00, H04L 67/131

(54) **AUGMENT GRAPH FOR SELECTIVE SHARING OF AUGMENTS ACROSS APPLICATIONS OR USERS**

(30) Priority: 14.03.2023 US 202318183607
(71) Applicant: Meta Platforms Technologies, LLC, Menlo Park, CA 94025 (US)
(72) Inventor: Millberg, Jennifer, Menlo Park (US); Jaeger, Benjamin Gordon, Menlo Park (US); Sheridan, Alan, Menlo Park (US); Powell, James, Menlo Park (US); Matican, Olga, Menlo Park (US)
(74) Representative: Murgitroyd & Company

(57) **Abstract**

Aspects of the present disclosure are directed to providing augment graph services for artificial reality systems. An augment graph represents a logical repository and manager of augments that stores augment information affiliated with a variety of applications and/or users. Augments are virtual objects displayed by a computing system within an environment. Implementations of the augment graph are distributed across multiple systems, such as multiple artificial realty systems, cloud systems, edge systems, and the like. The augment information stored by the augment graph can include data that supports the display of a diverse set of augments. The distributed augment graph can selectively share graph augment information with requesting applications and/or users according to access control restrictions enforced for the persisted augments. Accordingly, augments generated by an owner application and/or user can be shared with multiple other applications and users via the augment graph.

## Description

### TECHNICAL FIELD

The present disclosure is directed to providing augment graph services for artificial reality (XR) systems.

### BACKGROUND

Artificial reality (XR) devices are becoming more prevalent. As they become more popular, the applications implemented on such devices are becoming more sophisticated. Augmented reality (AR) applications can provide interactive 3D experiences that combine images of the real-world with virtual objects, while virtual reality (VR) applications can provide an entirely self-contained 3D computer environment. For example, an AR application can be used to superimpose virtual objects over a video feed of a real scene that is observed by a camera. A real-world user in the scene can then make gestures captured by the camera that can provide interactivity between the real-world user and the virtual objects. Mixed reality (MR) systems can allow light to enter a user's eye that is partially generated by a computing system and partially includes light reflected off objects in the real-world. AR, MR, and VR (together XR) experiences can be observed by a user through XR systems, such as a head-mounted display (HMD). XR systems can display a XR environment to users that include virtual objects, such as augments.

### SUMMARY

The present invention provides a method, a computer-readable storage medium and a system as defined in the appended claims.

In accordance with a first aspect, there is provided a method for providing remote augment graph services for a plurality of artificial reality (XR) systems, the method comprising:
receiving, at a remote system from a XR system affiliated with a user, augment information for augments associated with the user, wherein:
the augment information comprises augment visual data descriptive of each augment's structure and visual appearance and augment display state data; and
the XR system generates the augment information in response to interactions with the user and/or software calls from an owner application executing at the XR system; and
storing, at the remote system, the received augment information for the augments in a portion of an augment graph, wherein:
   the augment graph comprises a plurality of sub-graphs that store augment information for augments associated with a plurality of users;
   the portion of the augment graph comprises a sub-graph for augments associated with the first user;
   defined access control restrictions for augments of the augment graph restrict access to the graph information of the augments; and
   the remote system transmits the augment information from the sub-graph to multiple XR systems that display one of more of the augments associated with the first user.

The method may further comprise:
receiving, at the remote system, a request from a second XR system affiliated with a second user for augment information from the sub-graph;
determining, by the augment graph, that the access control restrictions for one or more augments of the sub-graph permit access by the second user; and
transmitting, to the second XR system from the remote system, augment information from the sub-graph for the one or more augments;
wherein the second XR system displays the one or more augments, to the second user, using the transmitted augment information.

The method of claim 2, wherein first user is the second user, and the access control restrictions permit the second user access to augment information from the sub-graph for the one or more augments based on the second user being an owner of the one or more augments.

The first user and the second user may be different users. The augment information from the sub-graph, for the one or more augments that the access control restrictions permit the second user access to, may comprise a subset of the augments associated with the first user. Access control restrictions of at least one augment from the sub-graph associated with the first user may restrict access, by the second user, to the at least one augment, wherein the restricting is based on the second user not being an owner of the at least one augment.

The augment display state data, for the augments associated with the first user and received from the first system, may indicate display locations within an XR environment displayed by first XR system. The augment display state data, for the augments associated with the first user stored at the sub-graph, may include the indicated display locations. The one or more augments may be displayed by the second XR system in a second XR environment at display locations that correspond to the display locations for the one or more augments in the first XR environment.

The first and second XR systems may be located in a same real-world environment, and the first XR environment and the second XR environment comprise a visual depiction of the same real-world environment. The indicated display locations may comprise spatial anchors for the augments associated with the first user with respect to the same real-world environment. The one or more augments may be displayed by the second XR system in the second XR environment with respect to the spatial anchors of the same real-world environment.

The first XR system may comprise a publisher component of the augments associated with the first user such that the first XR system pushes updates for the augment display state data of the augments associated with the first user to the remote system. The second XR system may comprise a subscriber component of the one or more augments such that the remote system pushes updates for the augment display state data of the one or more augments to the second XR system.

The method may further comprise:
receiving, at the remote system from the first XR system, updates for the augment display state data of the augments associated with the first user, wherein the updates for the augment display state data change an indicated spatial anchor for at least one altered augment of the of the augments associated with the first user;
storing the updated augment display state data for the augments associated with the first user to the sub-graph; and
pushing, from the remote system to the second XR system, updated augment display state data for the one or more augments to the second XR system, wherein,
the one or more augments comprise the at least one altered augment; and
the second XR system, in response to receiving the updated augment display state data, displays the least one altered augment using the changed indicated spatial anchor.

The remote system may comprise an edge system and/or a cloud system.

In accordance with a second aspect, there is provided a computer-readable storage medium storing instructions that, when executed by a computing system, cause the computing system to perform a process for providing remote augment graph services for a plurality of artificial reality (XR) systems, the process comprising:
receiving, at a remote system from a XR system affiliated with a user, augment information for augments associated with the user, wherein:
the augment information comprises augment visual data descriptive of each augment's structure and visual appearance and augment display state data; and
an owner application executing at the XR system generates the augment information; and
storing, at the remote system, the received augment information for the augments in a portion of an augment graph, wherein:
   the augment graph comprises a plurality of sub-graphs that store augment information for augments associated with a plurality of users;
   the portion of the augment graph comprises a sub-graph for augments associated with the first user; and
   the remote system transmits the augment information from the sub-graph to multiple XR systems that display one of more of the augments associated with the first user.

The process may further comprise:
receiving, at the remote system, a request from a second XR system affiliated with a second user for augment information from the sub-graph;
determining, by the augment graph, that the access control restrictions for one or more augments of the sub-graph permit access by the second user; and
transmitting, to the second XR system from the remote system, augment information from the sub-graph for the one or more augments;
wherein the second XR system displays the one or more augments, to the second user, using the transmitted augment information.

The first user may be the second user, and the access control restrictions may permit the second user access to augment information from the sub-graph for the one or more augments based on the second user being an owner of the one or more augments.

The first user and the second user may be different users. The augment information from the sub-graph for the one or more augments that the access control restrictions permit the second user access to may comprise a subset of the augments associated with the first user. Access control restrictions of at least one augment from the sub-graph associated with the first user may restrict access, by the second user, to the at least one augment, wherein the restricting is based on the second user not being an owner of the at least one augment.

The augment display state data, for the augments associated with the first user and received from the first system, may indicate display locations within an XR environment displayed by first XR system. The augment display state data for the augments associated with the first user stored at the sub-graph, may include the indicated display locations. The one or more augments may be displayed by the second XR system in a second XR environment at display locations that correspond to the display locations for the one or more augments in the first XR environment.

The first and second XR systems may be located in a same real-world environment, and the first XR environment and the second XR environment may comprise a visual depiction of the same real-world environment. The indicated display locations may comprise spatial anchors for the augments associated with the first user with respect to the same real-world environment. The one or more augments may be displayed by the second XR system in the second XR environment with respect to the spatial anchors of the same real-world environment.

The first XR system may comprise a publisher component of the augments associated with the first user such that the first XR system pushes updates for the augment display state data of the augments associated with the first user to the remote system. The second XR system may comprise a subscriber component of the one or more augments such that the remote system pushes updates for the augment display state data of the one or more augments to the second XR system.

The process may further comprise:
receiving, at the remote system from the first XR system, updates for the augment display state data of the augments associated with the first user, wherein the updates for the augment display state data change an indicated spatial anchor for at least one altered augment of the of the augments associated with the first user;
storing the updated augment display state data for the augments associated with the first user to the sub-graph; and
pushing, from the remote system to the second XR system, updated augment display state data for the one or more augments to the second XR system; wherein:
   the one or more augments comprise the at least one altered augment; and
   the second XR system, in response to receiving the updated augment display state data, displays the least one altered augment using the changed indicated spatial anchor.

The remote system may comprise an edge system and/or a cloud system.

In accordance with a third aspect, there is provided a computing system for providing augment graph services for one or more artificial reality (XR) systems, the computing system comprising:
one or more processors; and
one or more memories storing instructions that, when executed by the one or more processors, cause the computing system to perform a process comprising:
   receiving, at a remote system from a XR system affiliated with a user, augment information for augments associated with the user, wherein:
   the augment information comprises augment visual data descriptive of each augment's structure and visual appearance and augment display state data; and
   an owner application executing at the XR system generates the augment information; and
   storing, at the remote system, the received augment information for the augments in a portion of an augment graph, wherein:
      the augment graph comprises a plurality of sub-graphs that store augment information for augments associated with a plurality of users;
      the portion of the augment graph comprises a sub-graph for augments associated with the first user;
      defined access control restrictions for augments of the augment graph restrict access to the graph information of the augments; and
      the remote system transmits the augment information from the sub-graph to multiple XR systems that display one of more of the augments associated with the first user.

The remote system may comprise an edge system and/or a cloud system.

It will be appreciated that any features described herein as being suitable for incorporation into one or more aspects are intended to be generalizable across any and all aspects described herein. Other aspects of the present disclosure can be understood by those skilled in the art in light of the description, the claims and the drawings. The foregoing general description and the following detailed description are exemplary and explanatory only and are not restrictive of the claims.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5 is a conceptual diagram of a distributed augment graph stored across a variety of devices.
Figure 6 is a conceptual diagram of a system for providing augment graph services to artificial reality systems.
Figure 7A is a conceptual diagram of applications sharing access to an augment graph.
Figure 7B is a conceptual diagram of artificial reality systems sharing access to a distributed augment graph.
Figure 7C is a conceptual diagram of publisher components and subscriber components sharing access to an augment graph.
Figures 8A and 8B are conceptual diagrams that illustrate generated augments and representative augment graph information.
Figure 9 is a conceptual diagram that illustrates an artificial reality application with visual user presence and augment information shared via an augment graph.
Figure 10 is a flow diagram illustrating a process used in some implementations of the present technology for providing augment graph services for artificial reality system(s).
Figure 11 is a flow diagram illustrating a process used in some implementations of the present technology for providing remote augment graph services for artificial reality systems.
Figure 12 is a flow diagram illustrating a process used in some implementations of the present technology for providing remote augment graph services for subscriber components and producer components.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure are directed to providing augment graph services for artificial reality systems. An augment graph represents a logical repository and manager of augments that stores augment information affiliated with a variety of applications and/or users. Augments are virtual objects displayed by a computing system, such as an artificial reality system, within an artificial reality environment. In some implementations, the augment graph is distributed across multiple systems, such as multiple artificial realty systems, cloud systems, edge systems, and the like. The distributed augment graph can selectively share the augment information persisted at the graph among requesting applications and/or users. The augment information stored by the augment graph can include data that supports the display of a diverse set of augments (e.g., two-dimensional augments, three-dimensional augments, static augments, dynamic augments, etc.), such as an augment specification (e.g., data descriptive of an augment's structure and visual appearance), an augment state (e.g., data descriptive of a display state for an augment, such as a dynamic augment), and other suitable data that supports augment display (e.g., spatial anchors, a display theme, etc.).

Data for augments persisted at an augment graph corresponds to augment instances generated and/or displayed by artificial reality applications. Example augments include two-dimensional virtual objects (e.g., images or panels), three-dimensional virtual objects (e.g., objects with a skeleton/mesh structure and skin, such as texture), static virtual objects (e.g., images), dynamic virtual objects (e.g., animated images, three-dimensional objects, virtual objects with interfaces to external systems causing dynamic changes, etc.), or any other suitable virtual object. Artificial reality systems and/or applications can display augment instances using the augment specification and augment state retrieved from the augment graph. The augment information that backs display of a given augment is based on the augment itself and its display capabilities.

For example, the augment information for a static image augment can include the image file or an indicator for the image file (e.g., a network/device location for the image file). On the other hand, the augment information for a three-dimensional virtual object with multiple poses/display states can include: structure data (e.g., mesh structure, skeleton, etc.) and/or visual presentation data (e.g., textures/skin, other visual information), pose(s) and/or view(s) data, and other suitable data for rendering the three-dimensional virtual objects in various states. The augment graph stores any suitable augment information that supports display of an augment instance.

Applications and/or users can request graph information for augments from the augment graph, and the graph can selectively share the augment information according to access restrictions. Implementations of the augment graph store individual augments distinguished via augment identifier and/or groups of augments (e.g., a groups of individually distinguishable augments). The augment graph can store access restrictions per augment and/or per augment group that limits the access to the augment information stored at the graph to selective application(s) and/or user(s). In some implementations, a given augment of an augment graph includes an owner user and/or an owner application. This given augment's access restrictions can be defined relative to the augment's owner user and/or owner application. Implementations of the augment graph can share graph information (e.g., permit access to the augment graph) owned by a user and/or application with multiple different users, applications, and/or artificial reality systems.

By accessing augment information persisted at the augment graph, a given artificial reality application can display augments generated by different artificial reality applications and different users. For example, a given artificial reality application can import an augment generated by a different artificial reality application, such as by accessing an augment graph and requesting the graph information for the augment. The augment graph supports selective sharing of augments among different artificial reality applications and users by enforcing the access restrictions defined for persisted augments.

An owner application of an augment can alter the display state of the augment (e.g., instance of the augment displayed by the application) and push the display state change to the augment graph. For example, the owner application can issue one or more software calls that communicate the state update for the augment to the augment graph. The augment graph can compare the software call(s), such as the calling application and/or user, to access restrictions for the augment to determine that the owner application has write access to the augment. The augment graph can then update the state information for the augment using the state update received from the owner application. In some implementations, the augment graph can push the state update for the augment to one or more subscriber applications that subscribe to state change updates for the augment. Based on the pushed state updates, one or more of the subscriber applications can display an instance of the augment with the altered display state.

In some implementations, the interactions between the distributed augment graph and artificial reality applications include graph application programming interface (API) calls and responses. For example, the artificial reality applications can issue graph API calls to the augment graph implemented by a graph API service. The graph API service can abstract the distributed storage locations of the augment graph such that a given artificial reality application executing at a given artificial reality system can access the global augment graph using the graph API.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

Conventional approaches to XR augments create silos where a given XR application's augments are display by that XR application, and not by other XR applications. Any inter-operability for augments that permits usage with different XR applications is often manually achieved by users, such as by uploading the augment information directly to the XR application and performing any formatting alterations required. This traditional approach fails to practically and efficiently reuse augments with different XR applications.

Implementations provide augment graph services that support augment sharing among different XR applications and different users. The augment sharing is secured by access restrictions enforced by the augment graph, thus maintaining privacy and access controls for owner users and/or applications. Implementations of the augment graph are distributed across different computing systems, such as XR systems, cloud systems, edge system, and the like. The distributed augment graph permits efficient sharing of augments to different XR systems located in different physical locations. In some implementations, a graph API abstracts the distributed nature of the augment graph and supports global graph access for XR applications using lightweight interactions.

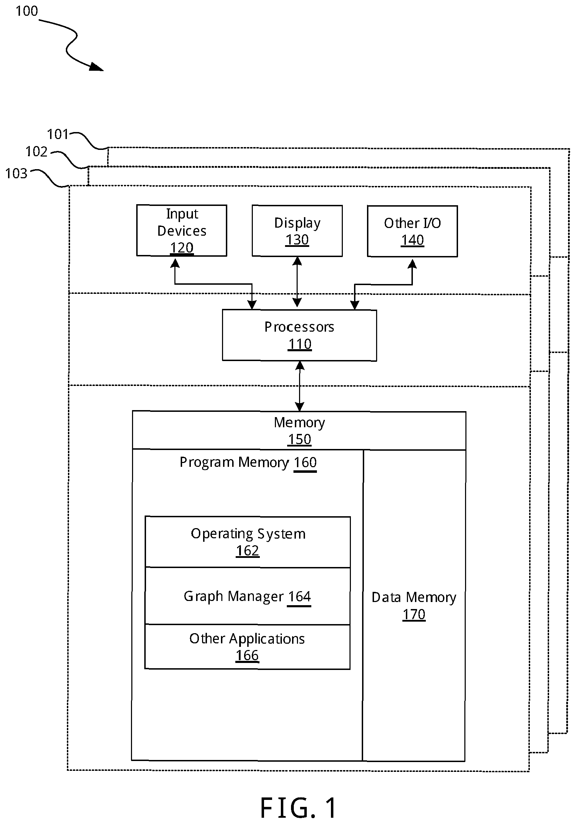

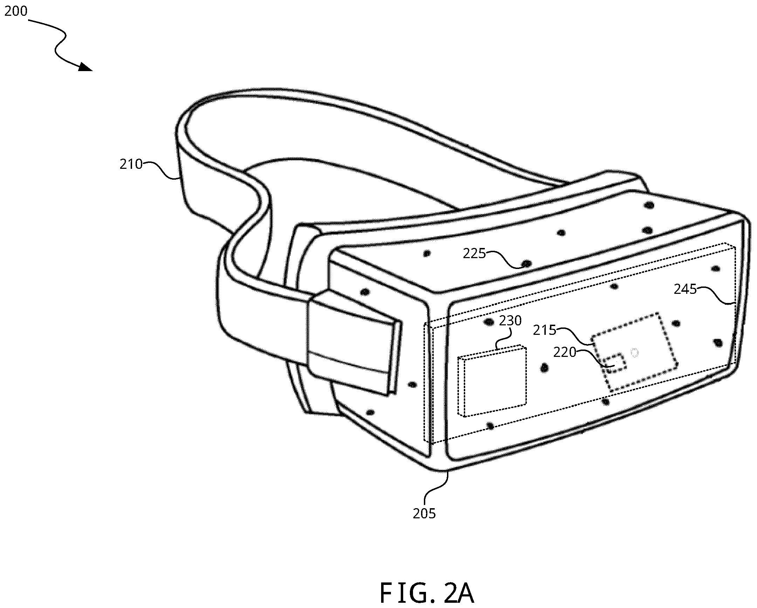

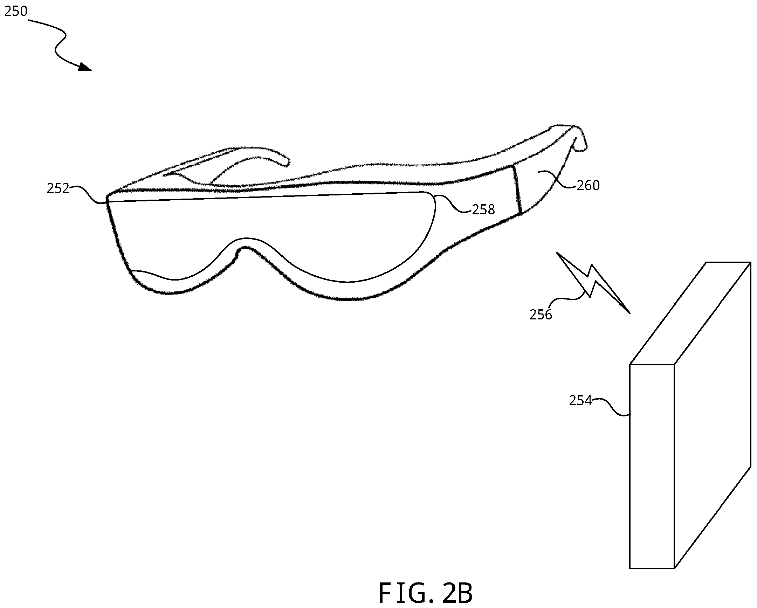

Several implementations are discussed below in more detail in reference to the figures. Figure 1 is a block diagram illustrating an overview of devices on which some implementations of the disclosed technology can operate. The devices can comprise hardware components of a computing system 100 that provide augment graph services for XR systems. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, girds, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, graph manager 164, and other application programs 166. Memory 150 can also include data memory 170 that can include, e.g., augment information (e.g., augment specification, augment state, etc.), spatial anchors, augment information access restrictions, configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessorbased systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200, in accordance with some embodiments. The HMD 200 includes a front rigid body 205 and a band 210. The front rigid body 205 includes one or more electronic display elements of an electronic display 245, an inertial motion unit (IMU) 215, one or more position sensors 220, locators 225, and one or more compute units 230. The position sensors 220, the IMU 215, and compute units 230 may be internal to the HMD 200 and may not be visible to the user. In various implementations, the IMU 215, position sensors 220, and locators 225 can track movement and location of the HMD 200 in the real world and in an artificial reality environment in three degrees of freedom (3DoF) or six degrees of freedom (6DoF). For example, the locators 225 can emit infrared light beams which create light points on real objects around the HMD 200. As another example, the IMU 215 can include e.g., one or more accelerometers, gyroscopes, magnetometers, other non-camera-based position, force, or orientation sensors, or combinations thereof. One or more cameras (not shown) integrated with the HMD 200 can detect the light points. Compute units 230 in the HMD 200 can use the detected light points to extrapolate position and movement of the HMD 200 as well as to identify the shape and position of the real objects surrounding the HMD 200.

The electronic display 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) subpixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

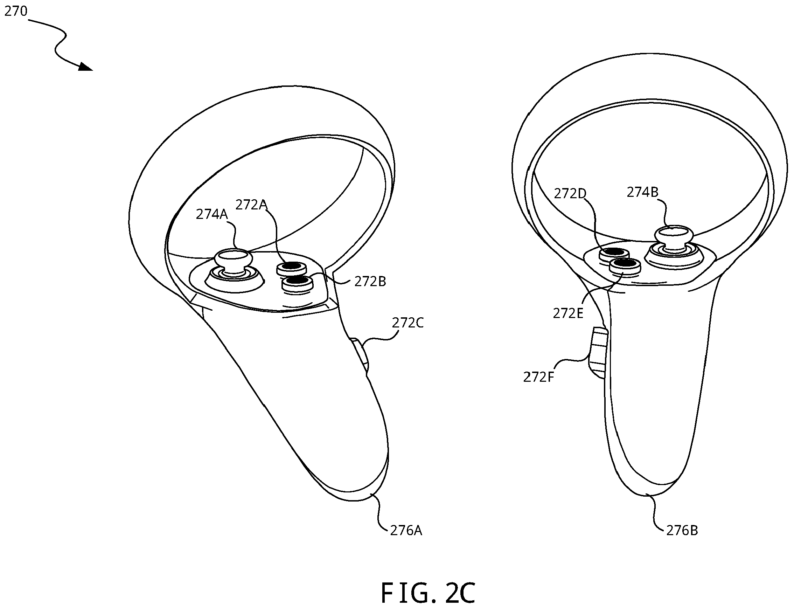

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

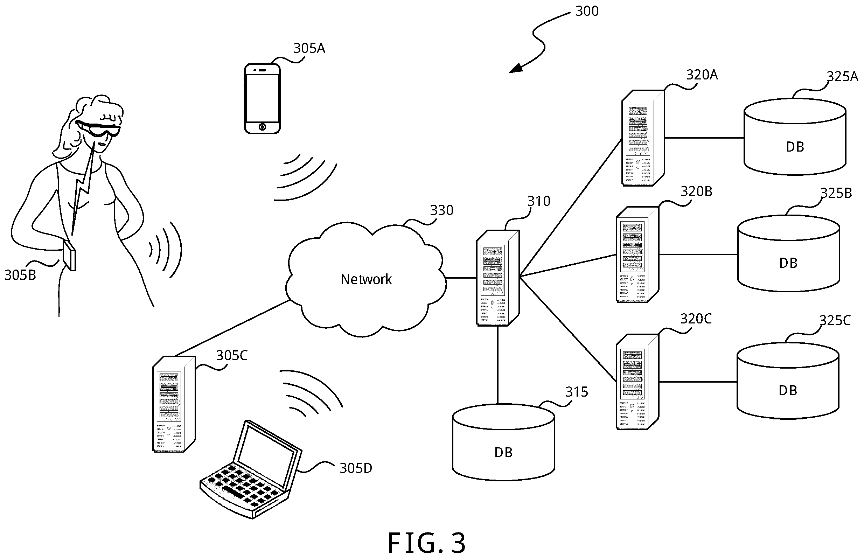

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

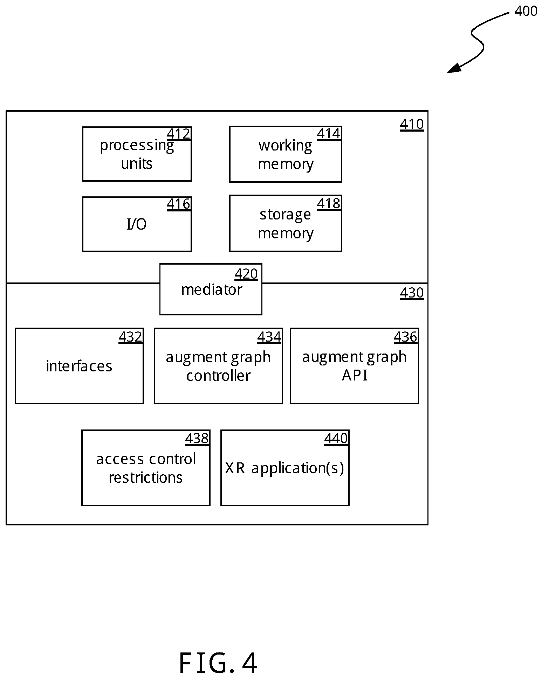

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for providing augment graph services for XR systems. Specialized components 430 can include augment graph controller 434, augment graph application programming interface (API) 436, access control restrictions 438, XR application(s) 440, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

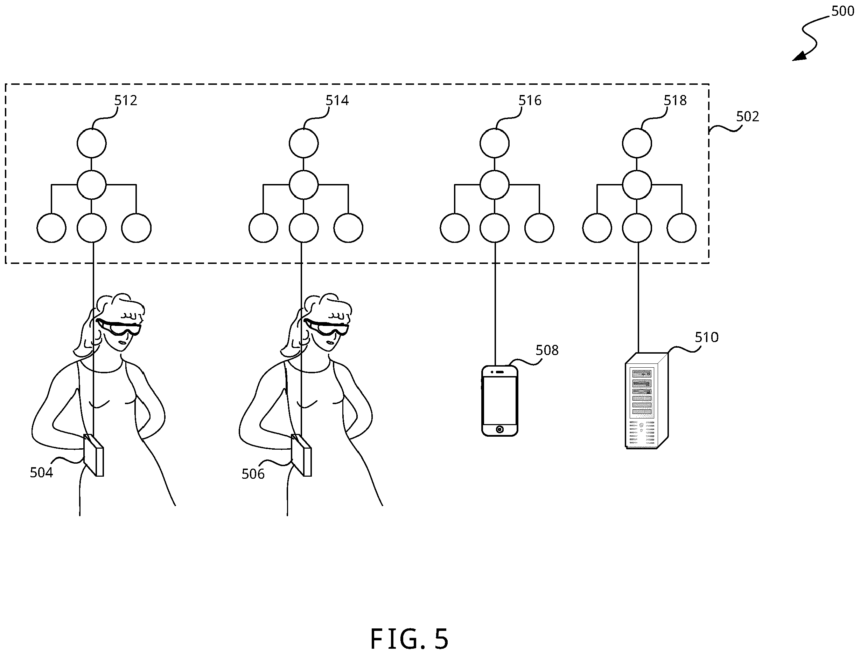

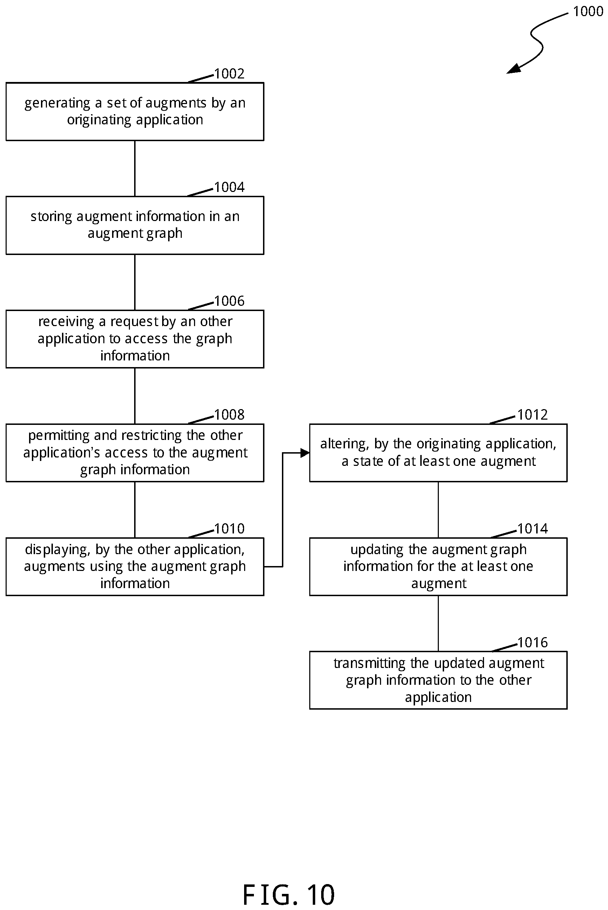

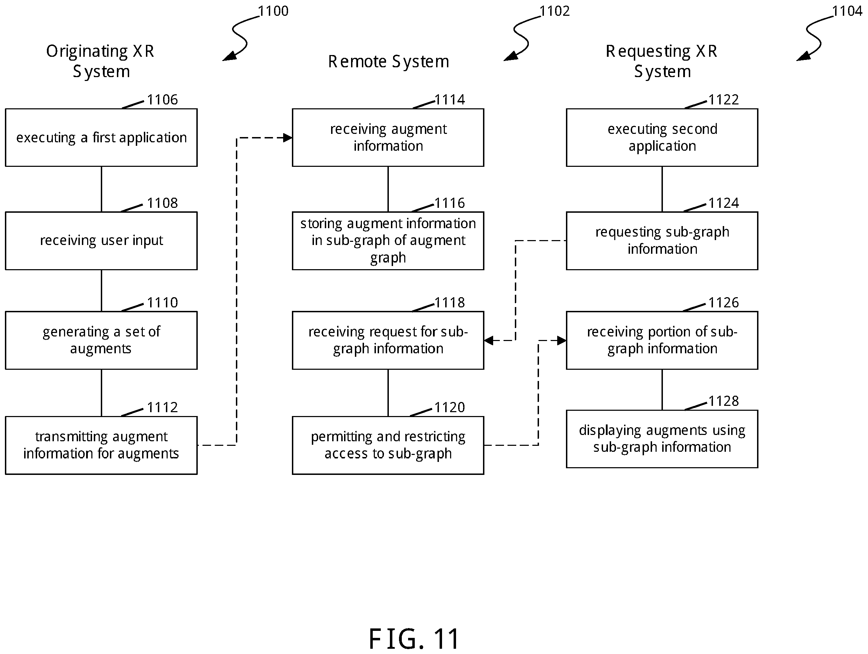

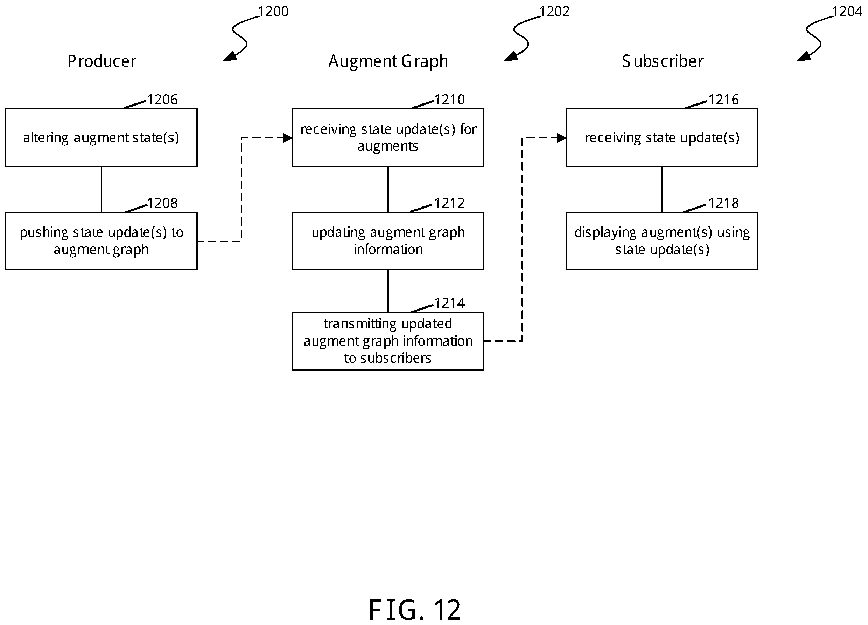

Augment graph controller 434 can manage the storing and securing of augment information for a global set of augments. An augment graph can be distributed across several different systems (e.g., XR systems, remote systems, such as cloud or edge systems, etc.), and components of augment graph controller 434 can be implemented on one or more of these systems. Augment graph controller 434 can selectively permit access (e.g., read access and/or write access) to augments persisted in the augment graph as defined by access control restrictions 438. Implementations of augment graph controller 434 perform graph services via software calls to augment graph API 436, such as storing, retrieving, and/or updating augment graph information, altering access control restrictions 438 for augments stored by the augment graph, and the like. Further details regarding augment graph controller 434 are described with respect to Figures 5, 6, 7A, 7B, 7C, 8A, 8B, 9, blocks 1004, 1006, 1008, 1014, and 1016 of Figure 10, blocks 1114, 1116, 1118, and 1120 of Figure 11, and blocks 1210, 1212, and 1214 of Figure 12.

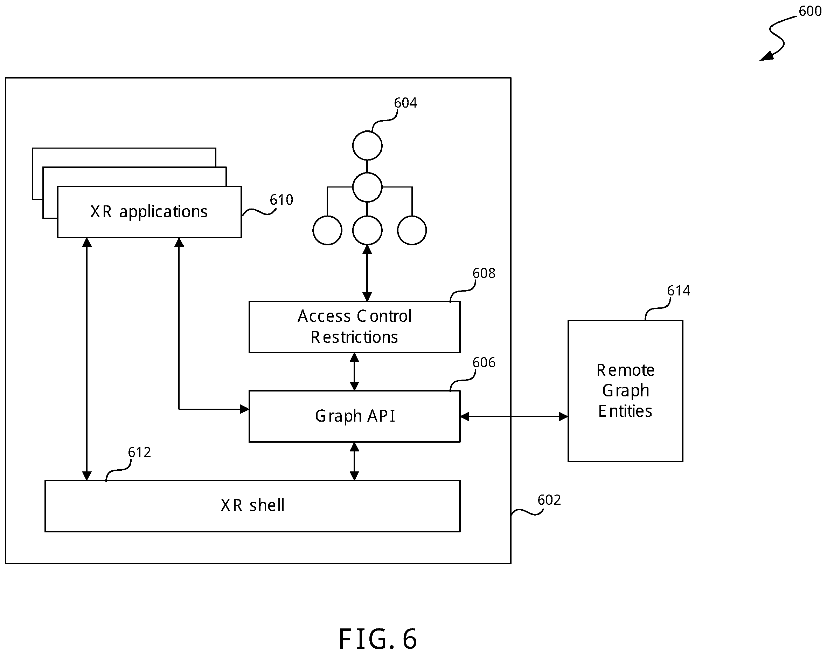

Augment graph API 436 can expose augment graph services for entities, such as XR systems, remote systems, and/or XR application(s) 440. For example, one of XR application(s) 440 executing at a given XR system can call augment graph API 436 to perform one or more augment graph services. Example augment graph services include generating a new augment within the augment graph, pushing augment graph updates, accessing augment graph information, writing augment graph information, and the like. Further details regarding augment graph API 436 are described with respect to Figures 6, 7A, 7B, 7C, 8A, 8B, blocks 1004, 1006, 1008, 1014, and 1016 of Figure 10, blocks 1114, 1116, 1118, and 1120 of Figure 11, and blocks 1210, 1212, and 1214 of Figure 12.

Access control restrictions 438 define access policies (e.g., read and/or write access) for individual augments of an augment graph and/or groups of augments. The access restrictions for an augment can be defined relative to the augment's owner user and/or owner application (e.g., user and/or application that generated the augment). For example, an application other than an augment's owner application can be permitted access to read or write the augment's information and a user other than an augment's owner user can be permitted access to read or write the augment's information. Access control restrictions 438 for a given augment (or augment group) can be defined by the augment's owner application and/or owner user. Figures 6, 7A, 7B, 7C, 9, blocks 1008, 1014, and 1016 of Figure 10, blocks 1114, 1116, 1118, and 1120 of Figure 11, and blocks 1210, 1212, and 1214 of Figure 12.

XR application(s) 440 are application(s) that execute at XR systems and interact with the augment graph, such as by generating augments, requesting augment information, subscribing to augment information (e.g., receiving push updates for augments), pushing state updates to the augment graph, and the like. XR application(s) can display XR environment(s) to user(s) that include displayed augments using the graph information accessed from the augment graph. In some implementations, XR application(s) 440 can be the owner applications for the augments of the augment graph. Example XR application include XR calling applications, XR applications that display shared XR environments, XR gaming applications, or any other suitable XR application that displays a XR environment to a user. Figures 6, 7A, 7C, 8A, 8B, 9, blocks 1002, 1006, 1010, 1012, 1016 of Figure 10, blocks 1106, 1108, 1110, 1112, 1122, 1124, 1126, and 1128 of Figure 11, and blocks 1206, 1108, 1216, and 1218 of Figure 12.

An augment graph represents a logical repository and manager distributed across various systems that stores augment information affiliated with a variety of applications and/or users and selectively shares the augment information among applications and/or users. The augment information stored by the augment graph can include data that supports the display of a diverse set of augments (e.g., two-dimensional augments, three-dimensional augments, static augments, dynamic augments, etc.), such as an augment specification (e.g., data descriptive of an augment's structure and visual appearance), an augment state (e.g., data descriptive of a display state for an augment, such as a dynamic augment), and other suitable data that supports augment display (e.g., spatial anchors, a display theme, etc.).

Applications and/or users can request graph information for augments from the augment graph, and the graph can selectively share the augment information according to access restrictions. Implementations of the augment graph store individual augments distinguished via augment identifier and/or groups of augments (e.g., a groups of individually distinguishable augments). The augment graph can store access restrictions per augment and/or per augment group that limits the access to the augment information stored at the graph to selective application(s) and/or user(s). In some implementations, a given augment of an augment graph includes an owner user and/or an owner application. This given augment's access restrictions can be defined relative to the augment's owner user and/or owner application. Implementations of the augment graph can share augment graph information (e.g., permit access to the augment graph) owned by a user and/or application with multiple different users, applications, and/or XR systems.

Figure 5 is a conceptual diagram of a distributed augment graph stored across a variety of devices. Diagram 500 includes augment graph 502, XR systems 504 and 506, user system 508, remote system 518, and sub-graph components 512, 514, 516, and 518. Augment graph 502 is a distributed graph that stores augment information comprising sub-graph components 512, 514, 516, and 518. Sub-graph component 512 can be stored at XR system 504, sub-graph component 514 can be stored at XR system 506, sub-graph component 516 can be stored at user system 508, and sub-graph 518 can be stored at remote system 510.

Sub-graph components 512, 514, 516, and 518 can, together, comprise an augment graph that stores global augment information. For example, an XR system 504 can generate a set augments via interactions with an application executing at XR system 504. The distributed augment graph can store augment information for this set of augments, such as at sub-graph component 512. Similarly, an XR system 506 can generate a set augments via interactions with an application executing at XR system 506, and sub-graph component 514 can store augment information for this set of augments.

User system 508 can be a two-dimensional display system (e.g., smartphone, laptop, tablet, smart home device with display, etc.). XR system 504 can generate a set augments via interactions with an application executing at user system 508, and sub-graph component 516 can store augment information for this set of augments. XR systems 504, XR system 506, and/or user system 508 can store some or all of the augment graph information for augments generated via these systems at remote system 518.

Remote system 510 can be a cloud system and/or edge system. In some implementations, augment information from XR systems 504, XR system 506, and/or user system 508 can be transmitted to remote system 510 for persistence at sub-graph component 518. For example, remote system 510 and sub-graph component 518 can store augment information for first augments generated via a first user's interactions with an application executing at XR system 504 and second augments generated via a second user's interactions with an application executing at XR system 506. In this example, the owner user of the first augments is the first user, the owner application of the first augments is the application executing at XR system 504, the owner user of the second augments is the second user, and the owner application of the second augments is the application executing at XR system 506.

One or more of sub-graph components 512, 514, 516, and/or 518 can store redundant copies of augments and augment information. For example, XR system 504 can store a local copy (e.g., sub-graph component 512) of augments originated by user(s) that operate XR system 504 and/or application(s) that execute on XR system 504, and portions or all of this local copy can be pushed to remote system 510 for remote storage of XR system 504's augment information (e.g., a portion of sub-graph component 518). For example, remote system 510 can be one of systems 310, 315, 320, or 325, which can coordinate to store redundant copies of augments and augment information for quick access by client systems 305, 504, 506, or 508. In this example, other systems (e.g., XR system 506 and/or user system 508) can request graph information from remote system 510 and sub-graph component 518 while XR system 504 is unavailable (e.g., powered down).

The augment information persisted in a distributed augment graph can be selectively accessed (e.g., read or written) by XR systems, application(s), and/or user(s) according to defined access permissions enforced by the augment graph. Using the accessed augment information, XR systems and applications can display corresponding augments in XR environments. The augment graph information can be accessed via graph services exposed to the XR systems, for example using one or more APIs. Figure 6 is a conceptual diagram of a system for providing augment graph services to XR systems. System 600 includes XR system 602, augment sub-graph 604, graph API 606, access control restrictions 608, XR applications 610, XR shell 612, and remote graph entities 614.

XR applications 610 can execute at XR system 602 and display one or more XR environments to the user of XR system 602. For example, interactions between XR applications 610 and XR shell 612 can control the display components of XR system 602 to display an XR environment and augments within the XR environment. XR applications 610 and/or XR shell 602 can generate augments or update the state of previously generated augments via software commands, in response to user input, or via any other suitable interactions.

Augment sub-graph 604 can be part of a distributed augment graph that stores graph information across remote graph entities 614. For example, remote graph entities 614 can be other systems that store portions of the distributed augment graph, such as other XR systems, edge systems, cloud systems, and the like. In some implementations, graph API 606 can retrieve augment graph information from augment sub-graph 604 or from remote graph entities 614. Graph API 606 can be communicatively connected to any suitable number of remote graph entities 614 such that the graph information stored at these remote graph entities 614 is accessible by XR applications 610 and the user of XR system 602 (according to the access restrictions for the graph information).

Graph API 606 can expose a number of API calls to XR applications 610 and/or XR shell 612, such as calls to: read augment graph information, write augment graph information, update augment graph information, and the like. The distributed augment graph can store augments distinguishable by augment identifier. For example, for each augment the graph can store/persist: the owner user(s); the owner application(s); augment identifier; augment specification (e.g., structure data, such as model, mesh structure, skeleton, etc., visual presentation data, such as textures/skin, colors, theme, etc., and other data that supports display of the augment); augment state information (e.g., views or poses, state of moveable or dynamic augment components, spatial anchor indicator, etc.); access control restrictions 608; and/or other suitable augment information. Some implementations include augments groups, or a group of augments distinguishable by a group identifier.

In some implementations, the augment graph can include parent node(s), such as an owner user and/or owner application, and child nodes that each comprise augments owned by the parent node(s). A graph with such a structure can efficiently share augments according to access control restrictions 608 that filter using the parent node (e.g., owner user and/or owner application). Some implementations also include an augment group node that can group subsets of the augment leaf nodes. In this example, the group of augments can be efficiently shared using the group parent nodes as a filter. Implementations of the augment graph include augment leaf nodes that store augment information for displaying the augments (e.g., augment specification, augment state, etc.), and each augment leaf node can comprise one or more parent nodes (e.g., owner application, owner user, and/or augment group) for efficiently sharing the augments among XR applications 610 and remote graph entities 614.

In some implementations, augments of the augment graph can be selected using an augment identifier, group identifier, owner user, owner application, or any other suitable information of the stored augment. The call(s) from XR applications 610 using graph API 606 can include call information that identifies an individual augment using an augment identifier, a group of augments using a group identifier, and/or a set of augments using an owner user and/or owner application. In some implementations, a given XR application 610 can access augment information for augments owned by different ones of XR applications 610 via graph API 606 and display these augments in a single XR environment. In another example, a given XR application 610 can access augment information for augments owned by different users and different applications via graph API 606 and display these augments in a single XR environment. The augments a given XR application 610 displays in a single XR environment can be backed by augment information accessed locally via graph API 606 and augment sub-graph 604, and/or accessed remotely via graph API 606 and remote graph entities 614.

Access control restrictions 608 can restrict access to augment graph information based on one or more of the requesting user, requesting application, and parameters of the requested augment(s) (e.g., owner user, owner application, augment group, augment format, etc.). For example, XR applications 610 calls to graph API 606 can include call information that identifies: the requesting XR application and the user requesting the graph access. Access control restrictions 608 can compare defined access restrictions for the requested augments to the call information to determine whether to permit the requested access.

Access control restrictions 608 can restrict access to individual augments of the augment graph or a group of augments. Relative to a requesting application, access control restrictions 608 can define the following example restrictions for a given augment/group: only accessible by the owner application; accessible to an explicit list of applications 'A', 'B', 'C', etc. (e.g., allowlist of applications); not accessible to applications 'A', 'B', 'C', etc. (e.g., restricted list of applications) but accessible by others; accessible to applications that are members of a predefined group, accessible to applications that implement a given standard/format for augments; publicly accessible; and/or any combination thereof.

Relative to a requesting user, access control restrictions 608 can define the following example restrictions for a given augment/group: only accessible by the owner user; accessible to an explicit list of users 'A', 'B', 'C', etc. (e.g., allowlist of users); not accessible to users 'A', 'B', 'C', etc. (e.g., restricted list of users) but accessible by others; accessible to users connected to the owner user via a social graph (e.g., first connections, such as friends, first or second connections, such as friends or friends of friends, up to third connections, etc.); accessible to users that are members of a predefined group; publicly accessible; and/or any combination thereof. The social graph can be a social graph owned by the requesting application (e.g., a VR gaming application that defines a social graph of known user connections) and/or any other suitable social graph (e.g., social graph of a social media application).

In some implementations, an augment of the augment graph can be formatted to comply with an augment standard and/or other format template. For example, the augment graph can store augments generated by any number of applications that use any number of storage formats, display techniques, etc. One or more augments standards or format templates can define a set of policies/protocols used to store augment information and/or display augments based on the stored augment information. When one of XR applications 610 requests access to an augment stored at the augment graph via a software call to graph API 606, access control restrictions 608 can determine whether the requesting application utilizes the same (or a compatible) standard or template as the requested augment.

For example, the software call to graph API 606 can define an augment standard/template utilized by the requesting application. Access control restrictions 608 can compare the augment standard/template utilized by the requesting application to the standard/template of the requested augment. When the comparison indicates compatibility, access control restrictions 608 can permit the access (given the request complies with other access restrictions) and when the comparison indicates a lack of compatibility, access control restrictions 608 can deny the access. Implementations that include a standard/template compatibility check can enhance the reliability and performance of the augment graph and mitigate the risk that the augment information accessed from the augment graph is improperly displayed by a requesting application.

Access control restrictions 608 for a given augment/group can be controlled via the owner application. For example, the owner application can define which users and/or applications are permitted to access the owned augment/group. In some implementations, the owner user of the given augment/group provides input via the owner application to define access control restrictions 608. The owner application can define and/or update access control restrictions 608 for the owned augment/group using one or more calls to graph API 606.

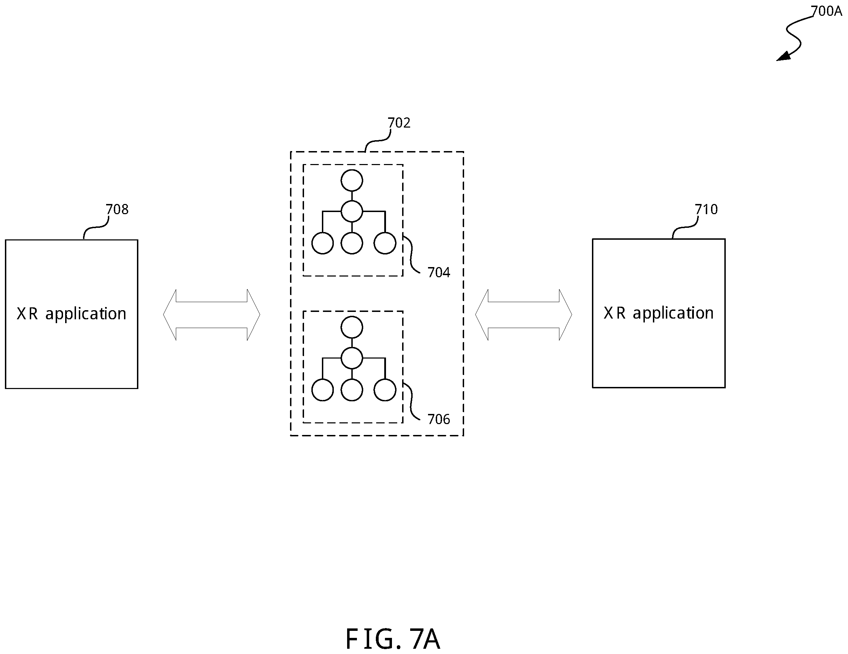

Implementations of the distributed augment graph utilize a global API service to simplify applications' interactions with the augment graph. Figure 7A is a conceptual diagram of applications sharing access to an augment graph. Diagram 700A includes augment graph 702, sub-graphs 704 and 706, and XR applications 708 and 710. Augment graph 702 can be a distributed augment graph and sub-graphs 704 and 706 can be stored at different storage locations, such as different XR systems, remote systems, etc.

XR application 708 can generate (via an API call) one or more augments at augment graph 702. For example, a user interacting with XR application 708 can create one or more augments. XR application 708 can display a XR environment to the user, and the user can create, place, and/or configure the augment within the displayed XR environment. XR application 708 can then perform software call(s) to augment graph 702 to persist user's augment within the graph. For example, the software call(s) can identify XR application 708 as the owner application, the user as the owner user, the augment's specification information, the augments state information, access control restrictions for the augment, and any other suitable augment information.

Based on the software call(s), augment graph 702 can provide the augment an augment identifier and store the augment specification information, state information, access control restrictions etc. under the augment identifier, owner user, and owner application (e.g., XR application 708). In some implementations, the defined access control restrictions for the generated augment can permit other applications (e.g., allowlist of applications, restricted list of applications, list of applications that utilize a given augment standard/format, etc.) and/or other users (e.g., allowlist of users, restricted list of users, users connected to the owner user via a social graph, etc.) to access the augment's information from the augment graph 702.

XR application 710 can request access to the generated augment from augment graph 702. For example, XR application 710 can perform software calls to augment graph 702 that request the generated augment, such as by requesting the augment identifier, augments owned XR application 708, and/or augments owned by the owner user. The request from XR application 710 can include the requesting application and/or a requesting user. In some implementations the request can also include an augment standard/format utilized by XR application 710.

Augment graph 702 can compare defined access restrictions from the generated augment with the request from XR application 710. For example, the defined access restrictions may permit or restrict XR application 710 and/or the requesting user. In an example, the defined access control restrictions permit XR application 710 and the requesting user access to the generated augment's graph information, and augment graph 702 can return this augment information to XR application 710 in response to the request. In some implementations, augment graph 702 can compare an augment standard/format for the generated augment with the augment standard/format utilized by XR application 710. When these two formats are compatible (or the same), augment graph 702 can return the augment information to XR application 710 in response to the request.

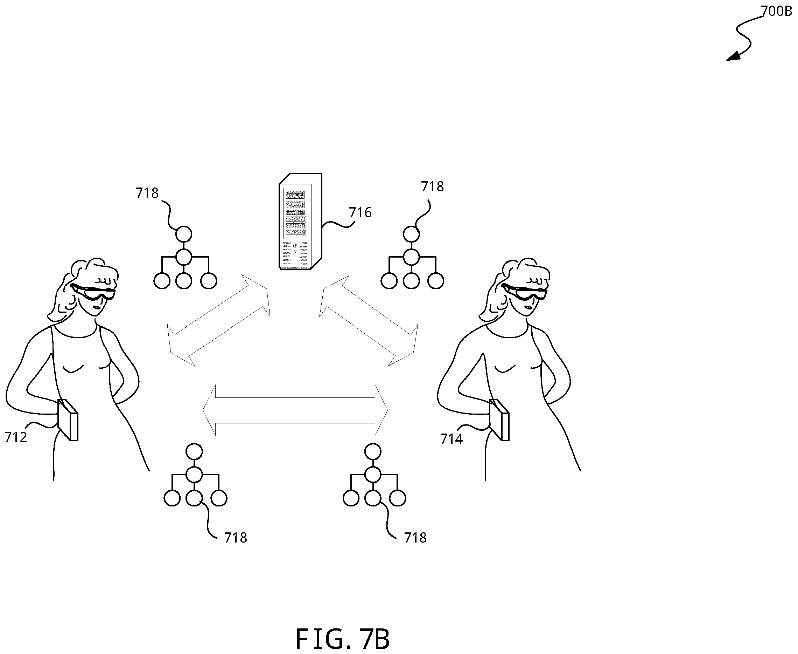

XR application 710 can display an instance of the augment using the received augment information to the requesting user, for example within an XR environment. Implementations of XR application 708, XR application 710, augment sub-graph 704, and/or augment sub-graph 706 can reside across a plurality of different systems. Figure 7B is a conceptual diagram of artificial reality systems sharing access to a distributed augment graph. Diagram 700B includes XR systems 712 and 714, remote system 716, and augment graph information 718. XR system 712, XR system 714, and remote system 716 can share augment graph information 718 based on software calls (e.g., augment graph API calls) to one another.

Referring back to Figure 7A, XR applications 708 and 710 can execute at different ones of XR systems 712 and 714. For example, XR application 708 can execute at XR system 712 and XR application 710 can execute at XR system 714. In this example, the augment generated by XR application 708 can be persisted at an augment sub-graph located at XR system 712 and/or remote system 716. The request from XR application 710 be transmitted from XR system 714 to one or both of XR system 712 and remote system 716. For example, when the generated augment is persisted at a sub-graph located at remote system 716, the remote system can provide augment information in response to requests when XR system 712 is not available (e.g., powered down).

In some implementations, the augment sub-graph located at XR system 712 stores augments owned by the user affiliated with XR system 712, while the augment sub-graph located at remote system 716 stores augments owned by multiple users, including the user affiliated with XR system 712 and the user affiliated with XR system 714. In this example, the augment sub-graph located at remote system 716 can efficiently distribute augment graph information owned by multiple applications/users to a variety of different requesting XR systems, requesting applications, and/or requesting users.

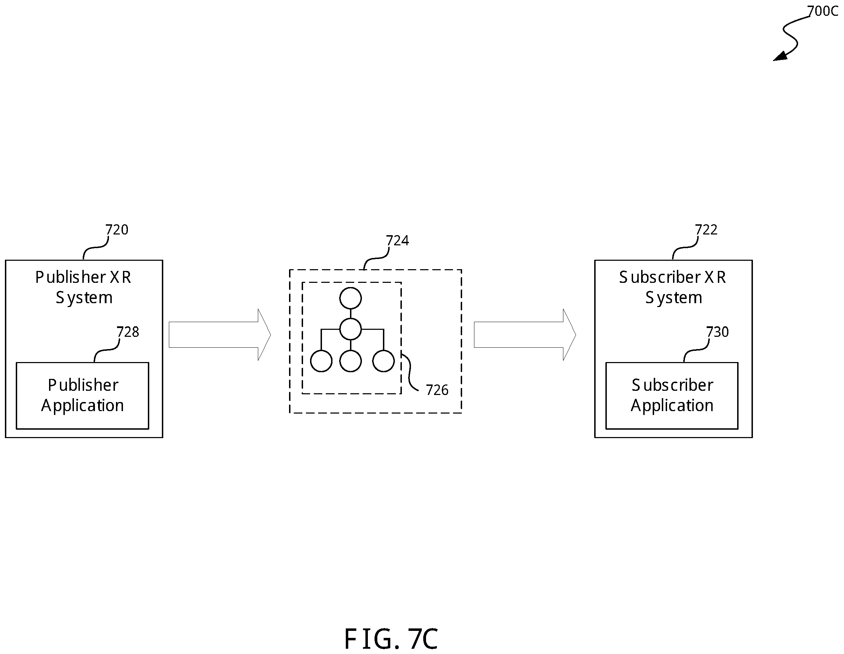

In some implementations, an augment graph can comprise publisher components and subscriber components that provide and consume updated augment information for augment(s) using a systematic workflow. Figure 7C is a conceptual diagram of publisher components and subscriber components sharing access to an augment graph. Diagram 700C includes publisher XR system 720, subscriber XR system 722, augment graph 724, state update information 726, publisher application 728, and subscriber application 730.

Implementations of augment graph 724 can persist augments for multiple XR systems, owner applications, and/or owner users. Augment graph 724 can be stored at a single system, or across multiple systems. In some implementations, publishers can transmit state update information 726 for one or more augments to augment graph 724, and subscribes can systematically receive state update information 726 for one or more augments from augment graph 724. For example, publisher application 728 at publisher XR system 720 can systematically push (via software calls to an augment graph API) state update information 726 for one or more augments stored at augment graph 724, such as the augments owned by publisher application 728. The state updates can correspond to state changes for the augments owned by publisher application 728, such as an updated view for an augment (e.g., orientation, theme, color scheme, etc.), spatial anchor, or any other suitable state updates. In some implementations, the publisher relationship between augment graph 724 and publisher application 728/publisher XR system 720 can be created: by default for augments persisted at augment graph 724 owned by publisher application 728; in response to software call(s) from publisher application 728 requesting the relationship for the one or more augments; automatically when publisher application 728 pushes a state update for one or more augments to augment graph 724; or via any other suitable workflow.

In response to state update information 726 for one or more augments persisted at augment graph 724, the augment graph can trigger a push of state update information 726 to subscriber application 730 at subscriber XR system 722. The state updates can correspond to state changes for the augments previously requested by subscriber application 730, state changes for augments currently displayed by subscriber application 730, state changes for augments owned by subscriber application 730 (e.g., when another application alters the state of an augmented owned by subscriber application 730), and the like. In some implementations, the subscriber relationship between augment graph 724 and subscriber application 730/publisherXR system 722 can be created: by default for augments persisted at augment graph 724 owned by subscriber application 730; in response to software call(s) from subscriber application 730 requesting the relationship for the one or more augments; automatically when subscriber application 730 requests augment information for one or more augments; or via any other suitable workflow.

In some implementations, publisher application 728 and subscriber application 730 may simultaneously display instances of an augment from augment graph 724. For example, publisher application 728 can own an augment stored at augment graph 724, and an instance of the augment can be displayed to a user of XR system 720 via an XR environment displayed by publisher application 728. Subscriber application 730 can request the augment's information from augment graph 724, and, using the requested augment information, an instance of the augment can be displayed to a user of XR system 722 via an XR environment displayed by subscriber application 730.

In this example, publisher application 728 can alter the state of the instance of the augment displayed by XR system 720, for example in response to input from the user. Based on the publisher relationship, publisher application 728 can push the state updates to augment graph 724, which can update the state information for the augment persisted at the augment graph. Similarly, based on the subscriber relationship, augment graph 724 can push the state updates to subscriber application 730. Using the received state updates, subscriber application 730 can alter the display of the instance of the augment displayed by subscriber XR system 722 to correspond to the state of the instance of the augment displayed by publisher XR system 720.

In another example, the state updates can be implemented asynchronously by subscriber application 730. For example, an instance of the augment owned by publisher application 728 can be displayed to the user of XR system 720, at a first point in time, via an XR environment displayed by publisher application 728. Augment graph 724 can store state information for the augment according to the latest state pushed by publisher application 728. Subscriber application 730 can request the augment's information from augment graph 724, and, using the augment information, an instance of the augment can be displayed to a user of XR system 722, at a second point in time (after the first point in time), via an XR environment displayed by subscriber application 730.

Publisher application 728 can then alter the state of the augment in a manner that is propagated to subscriber application 730 later in time. For example, while subscriber application 730 is not executing at XR system 722, publisher application 728 can alter the state of the augment and push corresponding state updates to augment graph 724, which can store the state updates to the augment graph. Later in time, when publisher application 728 is no longer executing at XR system 720, subscriber application 730 can execute at XR system 722, and the latest state for the augment can be pushed by augment graph 724 to subscriber application 730. In this example, subscriber application 730 can alter the display of the instance of the augment displayed to the user of XR system 722 using the latest state information received from augment graph 724. Such an implementation can perform asynchronous state updates for an augment managed at augment graph 724 across different XR systems and/or different XR applications.

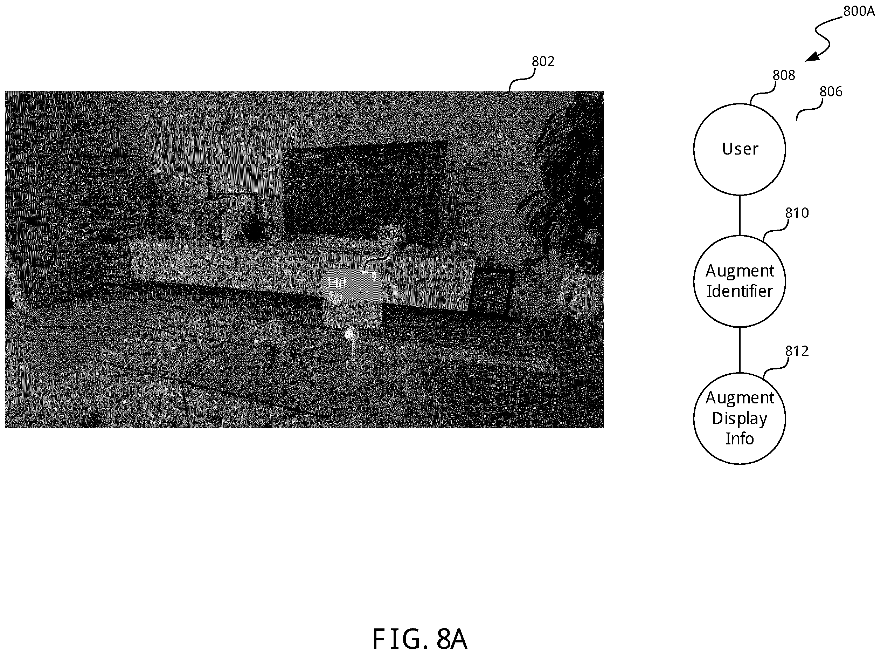

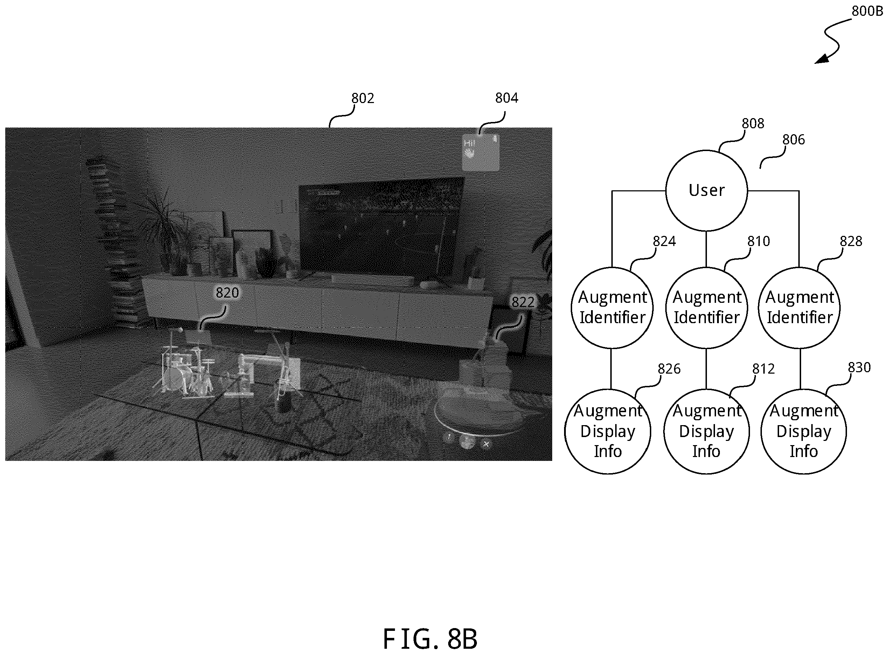

Users and applications generate augments persisted by implementations of the augment graph, and alterations to states of these augments are pushed to the augment graph for persistence and sharing. Figures 8A and 8B are conceptual diagrams that illustrate generated augments and representative augment graph information. Diagram 800A includes XR environment 802, augment 804, augment graph 806, user entity 808, augment identifier 810, and augment display information 812. Diagram 800B includes XR environment 802, augments 804, 820, and 822, augment graph 806, user entity 808, augment identifiers 810, 824, and 828, and augment display information 812, 826, and 830.

An XR application executing at a XR system can display XR environment 802 to a user. The user can interact with the executing XR application to create augment 804. For example, the XR application can comprise templates of multiple augments and the user can select (e.g., drag and drop) augment 804. In another example, the executing XR application can generate an augment based on a data file provided by the user/XR system (e.g., an image, a data file with an augment model and visual data, etc.). The XR application can generate augment 804 in any other suitable manner.

In some implementations, the XR application can perform software call(s) to augment graph 806, and augment graph 806 can create an augment at the graph in response to the call(s) that corresponds to augment 804. The augment can comprise augment information organized in a graph, such as user entity 808 (e.g., the owner user), augment identifier 810, and augment display information 812 (e.g., augment specification, augment state, etc.). Other information stored for the augment in augment graph 806 can include the owner application, augment group information, access restrictions, and any other suitable augment information. The graph for the created augment can include parent nodes organized in any suitable order, such as user entity 808, owner application, and/or augment group, child node(s), such as augment identifier 810, and leaf nodes, such as augment display information 812, access restrictions, and any other suitable augment information. The structure of the graph for the created augment can be any other suitable structure.

Augment 804 can comprise dynamic augment information. For example, augment 804 includes text and symbols displayed at the augment. The user can edit the text and symbols via interactions with the executing application to alter augment 804. Based on the alterations, the XR application can push (via API calls) updated state information to augment graph 806, which in turn can update augment display info 812 with the edited text/symbols. In some implementations, augment display info 812 stores an indicator of augment 804's spatial anchor, and updates to this spatial anchor can be pushed to augment graph 806 for storage.

The user can generate a number of additional augments via interactions with the XR application. Diagram 800B illustrates augments 820 and 822 generated by the user via the XR application. The XR application can perform software call(s) to augment graph 806, and augment graph 806 can create augments at the graph in response to the calls that correspond to augments 820 and 822. The augments can comprise augment information organized in a graph under user entity 808. Each of augments 806, 820, and 822 comprises augment identifiers 810, 824, and 828, and augment display information 81, 826, and 830. Other information stored for the augment in augment graph 806 can include the owner application, augment group information, access restrictions, and any other suitable augment information. In some implementations, the augments can be stored under any suitable parent node(s), such as owner user, owner application, and/or augment group.

In some implementations, augments 804, 820, and 822 can be grouped into an augment group so that the augments can be efficiently shared with other users/applications. For example, augment graph 806 can group the created augments under a group identifier, provide augment information for the augments of the group in response to requests that identify the group identifier, and push state updates to applications/users when any of the augments of the group comprises updated state information.

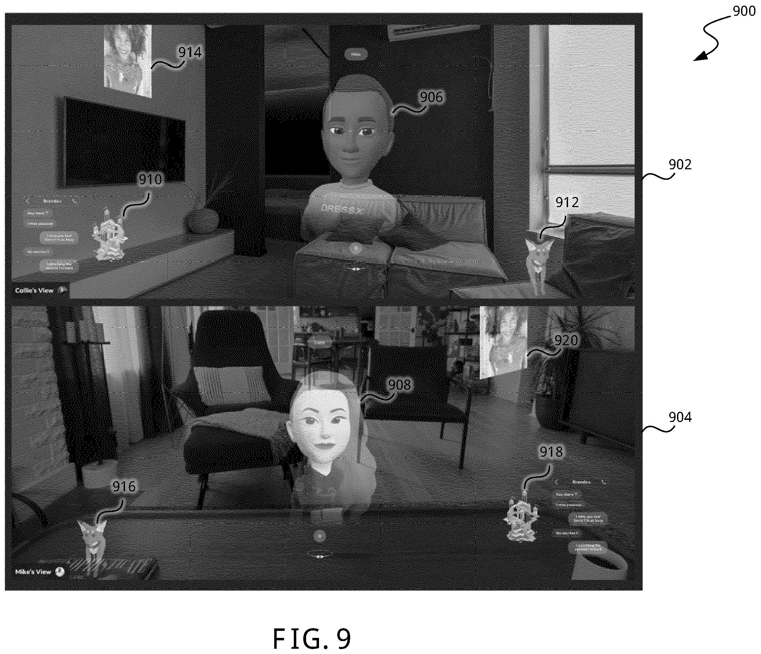

Implementations of the augment graph can interact with a variety of XR applications, such as a XR calling application with visual user presence. Figure 9 is a conceptual diagram that illustrates an XR application with visual user presence and augment information shared via an augment graph. Diagram 900 includes first user view 902, second user view 904, user presence 906 and 908, source augments 910, 912, and 914, and target augments 916, 918, and 920.

Diagram 900 can be the display of a XR system to a first user that includes first user view 902, or the first user's XR environment, and second user view 904, or the second user's XR environment. For example, the first user (e.g., user of the XR system) and second user (e.g., user of a participating XR system) can be participants on a XR call via a XR calling application executing at each user's XR system. User presence 906 can be an avatar representation of the first user and user presence 908 can be an avatar representation of the second user. The first user's XR environment can include the first user's real-world surroundings and the second user's XR environment can include the second user's real-world surroundings.

Source augments 910, 912, and 914 displayed in first user view 902 can be a group of augments owned by the first user that are persisted at a distributed augment graph (e.g., stored at the XR system and/or a remote system). In some implementations, the second user, via the XR calling application executing at the second user's XR system, can request the source user's group of augments. In this example, the XR calling application executing at both user's XR systems can be the owner application of the group of augments. The XR calling application executing at the second user's XR system can request, from the augment graph, augment information for the group of augments. In some implementations, the augment graph can compare access restrictions for the group of augments and determine that the request and the second user are permitted to access the graph information for the group of augments.

The augment graph can transmit the graph information for the group of augments to the second user's XR system. In some implementations, the second user's XR system can display target augments 916, 918, and 920 using the graph information of the group of augments retrieved from the augment graph. In the illustrated example, the first user and second user are not co-located, and thus the real-world environment of first user view 902 is different than the real-world environment of second user view 904. In this example, source augments 910, 912, and 914 and target augments 916, 918, and 920 comprise the same visual appearance (based on the persisted augment information at the augment graph for the group of augments), however not the same spatial anchors.

The XR calling application (or another software module at the XR system of the second user, such as XR shell) can place target augments 916, 918, and 920 within the XR environment of second user view 904 in any suitable manner. For example, the XR calling application and/or XR shell can locate a real-world surface suitable to serve as the spatial anchor for each of target augments 916, 918, and 920, and display these augments relative to the located real-world surfaces. A suitable surface to serve as a spatial anchor for a given augment can comprise a surface area large enough to fit the given augment, a orientation within the XR environment suitable for the given augment, and the like.

In some implementations, the access restrictions stored at the augment graph for the augment group may permit the second user write access to generate new augments for the augment group. For example, the second user may generate, via interactions with the XR calling application, a fourth augment (not illustrated in Figure 9) and push the augment information for the fourth augment to the augment graph. Based on the access restrictions for the augment group, the augment graph can create a new augment within the augment group that is owned by the first user, the second user, or both. The augment information for the newly persisted augment can be transmitted from the augment graph to the XR system of the first user, and the XR calling application executing at the XR system of the first user can display the fourth augment within the XR environment of the first user view 902. In this example, the second user enhanced the first user's augment group with a new augment based on the flexible access restrictions implemented by the augment graph.

In some implementations, different users and/or applications can share, using the augment graph, augments within a same real-world environment. For example, a first XR system can execute a first XR application in a real-world environment, and a second XR system can execute a second XR application in the same real-world environment. In this example, the first XR system can display a first XR environment to a first user that includes the same real-world environment and the second XR system can display a second XR environment to a second user that includes the same real-world environment. The first and second users can be displayed the first and second XR environment at the same time (e.g., co-located at the same time), or at different times.

In some implementations, the augment graph can persist augments owned by the first user and first XR application that include spatial anchor indicators within the same real-world environment. The second XR system, second XR application, and/or second user can request access to the augment graph information for the augments owned by the first user that comprise the spatial anchor indicators within the same real-world environment. When permitted access by the access restrictions of these augments, the augment graph can transmit the graph information for the augments to the second XR system/second XR application.

In this example, the spatial anchor indicators within the same real-world environment can also be shared with the second XR system/second XR application. For example, the spatial anchor indicators for the augments can be stored to the augment graph by a spatial anchor sharing service, such as Open XR, executing at the first XR system and/or at any other suitable computing system. Once retrieved, the second XR application and/or second XR system can locate the spatial anchors within the same real-world environment and display the augments, using the retrieved augment graph information, relative to their spatial anchors in the second XR environment. In some implementations, the spatial anchor sharing service can interact with the second XR application to locate the spatial anchors within the second XR environment. Accordingly, the first and second XR applications can display augments from the augment graph relative to the same spatial anchors.

Those skilled in the art will appreciate that the components illustrated in Figures 1-6, 7A, 7B 7C, 8A, 8B, and 9 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 10 is a flow diagram illustrating a process used in some implementations of the present technology for providing augment graph services for artificial reality system(s). In some implementations, process 1000 is performed in response to software calls or user input that generates augments or updates the state of previously generated augments. In some implementations, process 1000 can be performed by a single system, such as a single XR system, or by multiple systems, such as multiple XR systems and/or a remote system.

At block 1002, process 1000 can generate a set of augments. For example, a user that interacts with a XR application executing at a XR system can generate the set of augments. The set of augments can be two-dimensional augments, three-dimensional augments, static augments, dynamic augments, and the like.

At block 1004, process 1000 can store augment information for the set of augments in an augment graph. In some implementations, the XR application that generated the set of augments can perform one or more software calls (e.g., graph API calls) to the augment graph to create persistent augments within the augment graph for the set of augments. In some implementations, the augment graph can generate persistent augments at the graph that each comprise an augment identifier. The generated augments can be child nodes under one or more parent nodes at the augment graph. For example, the user that generated the augments can be an owner user for the set of augments and the XR application that generated the augments can be the owner application. The parent nodes for the generated augments can be the owner user and/or the owner application. In some implementations, the nodes under an owner user parent node can comprise a sub-graph of the augment graph for the owner user. In some implementations, the graph information stored for each of the augments can include an augment specification and augment state information.

Implementations of the augment graph store access restrictions for the created augments. For example, the access restrictions for a given augment define which applications and/or users are permitted access (e.g., read access and/or write access) to the augment information for the given augment. Relative to a requesting application, example access restrictions include: only accessible by the owner application; accessible to an explicit list of applications 'A', 'B', 'C', etc. (e.g., allowlist of applications); not accessible to applications 'A', 'B', 'C', etc. (e.g., restricted list of applications) but accessible by others; accessible to applications that are members of a predefined group, accessible to applications that implement a given standard/format for augments; publicly accessible; and/or any combination thereof. Relative to a requesting user, example access restrictions include: only accessible by the owner user; accessible to an explicit list of users 'A', 'B', 'C', etc. (e.g., allowlist of users); not accessible to users 'A', 'B', 'C', etc. (e.g., restricted list of users) but accessible by others; accessible to users connected to the owner user via a social graph (e.g., first connections, such as friends, first or second connections, such as friends or friends of friends, up to third connections, etc.); accessible to users that are members of a predefined group; publicly accessible; and/or any combination thereof.

In some implementations, two of more of the set of augments can be grouped under an augment group. For example, the owner user and/or owner application can request (via graph API call(s) to the augment graph) an augment group for two or more of the augments. The augment graph can group the two or more augments under an augment group identifier, and augment information for the two or more augments can be shared via the augment group. In some implementations, a single set of access restrictions for the augment group can apply to each augment of the two or more augments.

At block 1006, process 1000 can receive a request by another XR application to access the graph information. For example, the other XR application can perform one or more software calls (e.g., graph API calls) that request augment information for the set of augments. The software call(s) can identify the set of augments using augment identifiers, a group identifier, the owner user, the owner application, or any combination thereof. In some implementations, the software call(s) can include call information that identifies the requesting user and requesting application.

At block 1008, process 1000 can permit and restrict the other XR application's access to the augment graph information. For example, the augment graph can compare the requesting user and requesting application to the access restrictions of the set of augments and/or augment group. In some implementations, access restrictions for the set of augments differ (e.g., at least one augment from the set of augments is not grouped). For example, based on the comparison between the requesting user/requesting application and the access restrictions, access is permitted for a subset of the set of augments and access is denied for at least one augment of the set of augments. In some implementations, access is denied for the at least one augment based on the access restrictions for the at least one augment limiting access to the owner user and/or owner application.

At block 1010, process 1000 can display, by the other XR application, the subset of augments using the augment graph information. For example, the other XR application can display the subset of augments using the augment information retrieved from the augment graph. In some implementations, the other XR application displays the subset of augments in a XR environment.

At block 1012, process 1000 can alter a state of at least one augment. For example, the XR application that originally generated the subset of augments can alter at least one of the subset of augments. In some implementations, interactions between the owner user and the XR application that originally generated the subset of augments (e.g., owner application) can alter a display state for the at least one augment.

At block 1014, process 1000 can update the augment graph information for the at least one augment. For example, the XR application that altered the at least one augment can perform software call(s) (e.g., graph API calls) that update the augment state information stored at the augment graph for the at least one augment with the altered display state.

At block 1016, process 1000 can transmit the updated augment graph information to the other XR application. For example, the other XR application may be identified as an XR application that subscribes to state updates for the altered augment. The other XR application may be displaying the altered augment at the time the augment graph is updated or the other XR application may have previously displayed the altered augment (e.g., prior to the altering). The state update at the augment graph for the altered augment can trigger transmission of the state update to the other XR application. In some implementations, the other XR application can display the altered augment with the altered display state in response to receiving the state update.

Figure 11 is a flow diagram illustrating a process used in some implementations of the present technology for providing remote augment graph services for artificial reality systems. In some implementations, process 1100 is performed at an originating XR system in response to a XR application executing at the originating XR system. In some implementations, process 1102 is performed at a remote system in response to receiving augment information. In some implementations, process 1104 is performed at a second XR system in response to an executing XR application requesting augment information.

At block 1106, process 1100 can execute a first XR application at an originating XR system. For example, the originating XR system can display a XR environment to a first user via the executing first XR application. At block 1108, process 1100 can receive user input at the originating XR system. For example, the first user can provide input via the executing first XR application.

At block 1110, process 1100 can generate a set of augments. For example, the user input and/or software calls from the first XR application can generate a set of augments at the originating XR system. The set of augments can be two-dimensional augments, three-dimensional augments, static augments, dynamic augments, or any other suitable augments.

At block 1112, process 1100 can transmit augment information for the set of augments to a remote system. For example, the first XR application can issue one or more software calls (e.g., graph API calls) to an augment graph to create persistent augments within the augment graph for the set of augments. The augment graph can be stored at one or more remote systems, such as cloud systems or edge systems.

At block 1114, process 1102 can receive the augment information. For example, the remote system that stores the augment graph can receive the software call(s) from the first XR application. At block 1116, process 1102 can store the augment information in a sub-graph of an augment graph. For example, the augment graph can generate persistent augments at the graph that each comprise an augment identifier. The generated augments can be child nodes under one or more parent nodes at the augment graph. For example, the first user that generated the augments can be an owner user for the set of augments and the first XR application can be the owner application. The parent nodes for the generated augments can be the owner user and/or the owner application.

In some implementations, the augment graph stores augments owned by different users and different XR applications. The nodes under an owner user parent node can comprise a sub-graph of the augment graph for the owner user. In some implementations, the graph information stored for each of the augments can include an augment specification and augment state information.

Implementations of the augment graph store access restrictions for the created augments. For example, the access restrictions for a given augment define which applications and/or users are permitted access (e.g., read access and/or write access) to the augment information for the given augment. Relative to a requesting application, example access restrictions include: only accessible by the owner application; accessible to an explicit list of applications 'A', 'B', 'C', etc. (e.g., allowlist of applications); not accessible to applications 'A', 'B', 'C', etc. (e.g., restricted list of applications) but accessible by others; accessible to applications that are members of a predefined group, accessible to applications that implement a given standard/format for augments; publicly accessible; and/or any combination thereof. Relative to a requesting user, example access restrictions include: only accessible by the owner user; accessible to an explicit list of users 'A', 'B', `C', etc. (e.g., allowlist of users); not accessible to users 'A', 'B', `C', etc. (e.g., restricted list of users) but accessible by others; accessible to users connected to the owner user via a social graph (e.g., first connections, such as friends, first or second connections, such as friends or friends of friends, up to third connections, etc.); accessible to users that are members of a predefined group; publicly accessible; and/or any combination thereof.

In some implementations, two of more of the set of augments can be grouped under an augment group. For example, the owner user and/or owner application can request (via graph API call(s) to the augment graph) an augment group for two or more of the augments. The augment graph can group the two or more augments under an augment group identifier, and augment information for the two or more augments can be shared via the augment group. In some implementations, a single set of access restrictions for the augment group can apply to each augment of the two or more augments.

At block 1118, process 1102 can receive a request for sub-graph information from a requesting XR system. For example, a second XR application executing at the requesting XR system can issue one or more software calls (e.g., graph API calls) that request augment information for the set of augments from the first user's sub-graph at the remote system. The software call(s) can identify the set of augments using augment identifiers, a group identifier, the owner user, the owner application, or any combination thereof. In some implementations, the software call(s) can include call information that identifies the requesting user and requesting application.

At block 1120, process 1102 can permit and restrict access to the sub-graph by the requesting XR system. For example, the augment graph can compare the requesting user and requesting application to the access restrictions of the set of augments and/or augment group. In some implementations, access restrictions for the set of augments differ (e.g., at least one augment from the set of augments is not grouped). For example, based on the comparison between the requesting user/requesting application and the access restrictions, access is permitted for a subset of the set of augments and access is denied for at least one augment of the set of augments. In some implementations, access is denied for the at least one augment based on the access restrictions for the at least one augment limiting access to the owner user and/or owner application. The augment graph at the remote system can transmit, to the requesting XR system, the sub-graph augment information the request is permitted to access (e.g., augment information for the subset of augments).

At block 1122, process 1104 can execute a second XR application. For example, the requesting XR system can execute the second XR application. In some implementations, the second XR application displays a second XR environment to a second user. At block 1124, process 1104 can request sub-graph information from the augment graph at the remote system. For example, the second XR application can issue software call(s) to the augment graph at the remote system that request sub-graph information for the set of augments owned by the first user. In some implementations, the software call(s) can include call information that identifies the requesting user and requesting application.

At block 1126, process 1104 can receive a portion of the requested sub-graph information. For example, the augment graph may permit access to a subset of the requested set of augments and restrict access to at least one of the set of augments. Augment information for the subset of augments can be received from the remote system at the second XR system.

At block 1128, process 1104 can display augments using the received sub-graph information. For example, the second XR application can display instances of the subset of augments in the second XR environment using the sub-graph information received from the remote system.

Figure 12 is a flow diagram illustrating a process used in some implementations of the present technology for providing remote augment graph services for subscriber components and producer components. In some implementations, process 1200 is performed at a producer component in response to software calls or user input that alter the state of augments, process 1202 is performed at an augment graph in response to receiving state updates for augments, and process 1204 is performed at a subscriber component in response to receiving state updates. In some implementations, process 1200, 1202, and/or 1204 can be performed by a single system, such as a single XR system, or by multiple systems, such as multiple XR systems and/or a remote system.

At block 1206, process 1200 can alter the state of augment(s) stored at an augment graph. For example, a producer component, such as a producer XR application, can alter the state (e.g., display state) of an instance of an augment persisted at an augment graph. For example, the producer component can be the owner application of the augment.

At block 1208, process 1200 can push state update(s) to an augment graph. For example, the producer component can push the changes to the state data for the instance of the augment to the augment graph. In some implementations, the producer component can issue one or more software call(s) (e.g., graph API calls) to the augment graph to push the state updates.

At block 1210, process 1202 can receive state update(s) for augment(s). For example, the augment graph can receive the software call(s) from the producer component with the updated state information for the augment. At block 1212, process 1202 can update augment graph information. For example, the augment graph can update the persisted state data for the augment in response to the software call(s). In some implementations, the augment graph can compare the software call(s) to access restrictions for the augment to determine that the producer component has write access to the augment state information.

At block 1214, process 1202 can transmit updated augment graph information to subscribers. For example, when state data for an augment persisted at the augment graph is updated, state update transmissions can be triggered for one or more subscriber components that subscribe to the augment. Subscriber components can subscribe to one or more augments at the augment graph by issuing software call(s) that create the subscription, requesting augment graph information for an augment and displaying an instance of the augment, or based on any other suitable interactions with the augment graph.

At block 1216, process 1204 can receive state update(s) for the augment. For example, the subscribe component can receive the state update for the augment from the augment graph. At block 1218, process 1204 can display the augment using the state update(s). For example, the subscriber component (e.g., XR application) can display the augment with the updated state in an XR environment to a user.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

## Claims

1. A method for providing remote augment graph services for a plurality of artificial reality (XR) systems, the method comprising:
receiving, at a remote system from a XR system affiliated with a user, augment information for augments associated with the user, wherein:
the augment information comprises augment visual data descriptive of each augment's structure and visual appearance and augment display state data, and
the XR system generates the augment information in response to interactions with the user and/or software calls from an owner application executing at the XR system; and
storing, at the remote system, the received augment information for the augments in a portion of an augment graph, wherein:
the augment graph comprises a plurality of sub-graphs that store augment information for augments associated with a plurality of users,
the portion of the augment graph comprises a sub-graph for augments associated with the first user,
defined access control restrictions for augments of the augment graph restrict access to the graph information of the augments, and
the remote system transmits the augment information from the sub-graph to multiple XR systems that display one of more of the augments associated with the first user.

2. The method of claim 1, further comprising:
receiving, at the remote system, a request from a second XR system affiliated with a second user for augment information from the sub-graph;
determining, by the augment graph, that the access control restrictions for one or more augments of the sub-graph permit access by the second user; and
transmitting, to the second XR system from the remote system, augment information from the sub-graph for the one or more augments,
wherein the second XR system displays the one or more augments, to the second user, using the transmitted augment information.

3. The method of claim 2, wherein first user is the second user, and the access control restrictions permit the second user access to augment information from the sub-graph for the one or more augments based on the second user being an owner of the one or more augments.

4. The method of claim 2, wherein,
the first user and the second user are different users,
the augment information from the sub-graph, for the one or more augments that the access control restrictions permit the second user access to, comprise a subset of the augments associated with the first user, and
access control restrictions of at least one augment from the sub-graph associated with the first user restrict access, by the second user, to the at least one augment, wherein the restricting is based on the second user not being an owner of the at least one augment.

5. The method of any preceding claim, wherein,
the augment display state data, for the augments associated with the first user and received from the first system, indicate display locations within an XR environment displayed by first XR system,
the augment display state data, for the augments associated with the first user stored at the sub-graph, includes the indicated display locations, and
the one or more augments are displayed by the second XR system in a second XR environment at display locations that correspond to the display locations for the one or more augments in the first XR environment;
optionally, wherein,
the first and second XR systems are located in a same real-world environment, and the first XR environment and the second XR environment comprise a visual depiction of the same real-world environment;
the indicated display locations comprise spatial anchors for the augments associated with the first user with respect to the same real-world environment; and
the one or more augments are displayed by the second XR system in the second XR environment with respect to the spatial anchors of the same real-world environment.

6. The method of any preceding claim, wherein,
the first XR system comprises a publisher component of the augments associated with the first user such that the first XR system pushes updates for the augment display state data of the augments associated with the first user to the remote system, and
the second XR system comprises a subscriber component of the one or more augments such that the remote system pushes updates for the augment display state data of the one or more augments to the second XR system;
optionally, the method, further comprising:
receiving, at the remote system from the first XR system, updates for the augment display state data of the augments associated with the first user, wherein the updates for the augment display state data change an indicated spatial anchor for at least one altered augment of the of the augments associated with the first user;
storing the updated augment display state data for the augments associated with the first user to the sub-graph; and
pushing, from the remote system to the second XR system, updated augment display state data for the one or more augments to the second XR system, wherein,
the one or more augments comprise the at least one altered augment, and
the second XR system, in response to receiving the updated augment display state data, displays the least one altered augment using the changed indicated spatial anchor.

7. The method of any preceding claim, wherein the remote system comprises an edge system and/or a cloud system.

8. A computer-readable storage medium storing instructions that, when executed by a computing system, cause the computing system to perform a process for providing remote augment graph services for a plurality of artificial reality (XR) systems, the process comprising:
receiving, at a remote system from a XR system affiliated with a user, augment information for augments associated with the user, wherein:
the augment information comprises augment visual data descriptive of each augment's structure and visual appearance and augment display state data, and
an owner application executing at the XR system generates the augment information; and
storing, at the remote system, the received augment information for the augments in a portion of an augment graph, wherein:
the augment graph comprises a plurality of sub-graphs that store augment information for augments associated with a plurality of users,
the portion of the augment graph comprises a sub-graph for augments associated with the first user, and
the remote system transmits the augment information from the sub-graph to multiple XR systems that display one of more of the augments associated with the first user.

9. The computer-readable storage medium of claim 8, wherein the process further comprises:
receiving, at the remote system, a request from a second XR system affiliated with a second user for augment information from the sub-graph;
determining, by the augment graph, that the access control restrictions for one or more augments of the sub-graph permit access by the second user; and
transmitting, to the second XR system from the remote system, augment information from the sub-graph for the one or more augments,
wherein the second XR system displays the one or more augments, to the second user, using the transmitted augment information.

10. The computer-readable storage medium of claim 9, and one or more of the following:
(i) wherein first user is the second user, and the access control restrictions permit the second user access to augment information from the sub-graph for the one or more augments based on the second user being an owner of the one or more augments;
(ii) wherein the first user and the second user are different users,
the augment information from the sub-graph for the one or more augments that the access control restrictions permit the second user access to comprise a subset of the augments associated with the first user; and access control restrictions of at least one augment from the sub-graph associated with the first user restrict access, by the second user, to the at least one augment, wherein the restricting is based on the second user not being an owner of the at least one augment.

11. The computer-readable storage medium of any one of claims 8 to 10, wherein,
the augment display state data, for the augments associated with the first user and received from the first system, indicate display locations within an XR environment displayed by first XR system;
the augment display state data for the augments associated with the first user stored at the sub-graph, includes the indicated display locations; and
the one or more augments are displayed by the second XR system in a second XR environment at display locations that correspond to the display locations for the one or more augments in the first XR environment;
optionally, wherein
the first and second XR systems are located in a same real-world environment, and the first XR environment and the second XR environment comprise a visual depiction of the same real-world environment;
the indicated display locations comprise spatial anchors for the augments associated with the first user with respect to the same real-world environment; and
the one or more augments are displayed by the second XR system in the second XR environment with respect to the spatial anchors of the same real-world environment.

12. The computer-readable storage medium of any one of claims 8 to 11, wherein,
the first XR system comprises a publisher component of the augments associated with the first user such that the first XR system pushes updates for the augment display state data of the augments associated with the first user to the remote system, and
the second XR system comprises a subscriber component of the one or more augments such that the remote system pushes updates for the augment display state data of the one or more augments to the second XR system;
optionally, wherein the process further comprises:
receiving, at the remote system from the first XR system, updates for the augment display state data of the augments associated with the first user, wherein the updates for the augment display state data change an indicated spatial anchor for at least one altered augment of the of the augments associated with the first user;
storing the updated augment display state data for the augments associated with the first user to the sub-graph; and
pushing, from the remote system to the second XR system, updated augment display state data for the one or more augments to the second XR system, wherein,
the one or more augments comprise the at least one altered augment, and
the second XR system, in response to receiving the updated augment display state data, displays the least one altered augment using the changed indicated spatial anchor.

13. The computer-readable storage medium of any one of claims 8 to 12, wherein the remote system comprises an edge system and/or a cloud system.

14. A computing system for providing augment graph services for one or more artificial reality (XR) systems, the computing system comprising:
one or more processors; and
one or more memories storing instructions that, when executed by the one or more processors, cause the computing system to perform a process comprising:
receiving, at a remote system from a XR system affiliated with a user, augment information for augments associated with the user, wherein:
the augment information comprises augment visual data descriptive of each augment's structure and visual appearance and augment display state data, and
an owner application executing at the XR system generates the augment information; and
storing, at the remote system, the received augment information for the augments in a portion of an augment graph, wherein:
the augment graph comprises a plurality of sub-graphs that store augment information for augments associated with a plurality of users,
the portion of the augment graph comprises a sub-graph for augments associated with the first user,
defined access control restrictions for augments of the augment graph restrict access to the graph information of the augments, and
the remote system transmits the augment information from the sub-graph to multiple XR systems that display one of more of the augments associated with the first user.

15. The system of claim 14, wherein the remote system comprises an edge system and/or a cloud system.
